# EUROPÄISCHE PATENTSCHRIFT

(11) **EP 0 363 769 B1**
(45) Veröffentlichungstag und Bekanntmachung des Hinweises auf die Patenterteilung: **23.03.1994**
(21) Anmeldenummer: 89118185.1
(22) Anmeldetag: 30.09.1989
(51) Int. Cl.: C08G 65/32, C08G 65/20, C07C 303/28

(54) **Verfahren zur Herstellung von Polytetrahydrofuran-alkylsulfonaten und -bisaminen**
Process for preparing polytetrahydrofuran alkyl sulfonates and polytetrahydrofuran bisamines
Procédé pour la préparation de polytetrahydrofurane-alkylesulfonates et -bisamines

(30) Priorität: 08.10.1988 DE 3834265
(43) Veröffentlichungstag der Anmeldung: 18.04.1990
(73) Patentinhaber: BASF Aktiengesellschaft, 67063 Ludwigshafen (DE)
(72) Erfinder: Koehler, Ulrich, Dr., D-6900 Heidelberg (DE); Schoenleben, Willibald, Dr., D-6900 Heidelberg (DE); Siegel, Hardo, Dr., D-6720 Speyer (DE)

(56) Entgegenhaltungen:
- DE-A- 1 595 274
- US-A- 3 405 105
- US-A- 3 824 219
- MAKROMOLEKULARE CHEMIE. RAPID COMMUNICATIONS,Nr. 7, Juli 1984; G. ZIEGAST et al.:" Linear and star-shaped hybrid polymers" *Seite 369-370*
- J. March "Advanced Organic Chemistry" 3rd Ed. p. 311-312, Wiley (1985);
- Fieser and Fieser "Reagents for Organic Chemistry" p. 662, Wiley (1967)

## Beschreibung

Diese Erfindung betrifft ein neues Verfahren zur Herstellung von Polytetrahydrofuran-alkylsulfonaten durch Umsetzung von Polytetrahydrofuran mit Alkylsulfonsäurehalogeniden und die Verwendung der so hergestellten Polytetrahydrofuranalkylsulfonate für die Herstellung von Polytetrahydrofuran-ω,ω'-diaminen.

Derivate des Polytetrahydrofurans sind gesuchte Zwischenprodukte für die Herstellung von Polymeren. Besonderes Interesse haben dabei Polytetrahydrofuran-ω,ω'-diamine gefunden. Da bei der direkten Überführung der endständigen HO-Gruppen des Polytetrahydrofurans in Aminogruppen ein hoher Anteil an sekundären Aminen erhalten wird oder Hydrogenolyse der Polyetherketten eintritt (US-A-4 181 682), hat man vorgeschlagen, die endständigen HO-Gruppen des Polytetrahydrofurans zunächst in bestimmte kationisch aktive Gruppen zu überführen, und die so erhaltenen Polytetrahydrofuranderivate zu den entsprechenden ω,ω'-Diaminen umzusetzen. Man kann bei diesem, z.B. in der US-A-3 824 220 beschriebenen Verfahren auch vom Tetrahydrofuran selbst ausgehen. In beiden Fällen wird, z.B. mit Hilfe von Trifluormethansulfonsäureanhydrid, das polymere Tetrahydrofuran mit den gewünschten kationisch aktiven Endgruppen erhalten. Für eine wirtschaftliche Herstellung kommt diese Methode nicht in Betracht. Sie ist auch hinsichtlich der Reinheit der hergestellten Produkte unbefriedigend, da sich die Bildung unerwünschter Nebenprodukte nicht ausschließen läßt.

Aus der JP-A-70/16443 ist ein Verfahren bekannt, bei dem man aus Polytetrahydrofuran durch Umsetzung mit p-Toluolsulfonsäurechlorid zunächst Polytetrahydrofuran-bis-p-toluolsulfonat herstellt, das man dann mit Ammoniak aminiert. Die angegebene Gesamtausbeute für das Diamin ist mit 15,5 % sehr gering, auch ist die Aufarbeitung, die über einen Ionenaustausch erfolgt, aufwendig.

In der US-A-3 405 105 wird die Polymerisation von Tetrahydrofuran durch Umsetzung mit einer organischen Sulfonsäure, wie Methansulfonsäure, beschrieben. Bei diesem Verfahren werden nach unseren Untersuchungen in geringer Ausbeute Polymerisate mit Molekulargewichten von etwa 1500 erhalten, die überwiegend nur halbseitig in Alkylsulfonatgruppen überführte HO-Gruppen enthalten.

Es bestand deshalb die Aufgabe, ein Verfahren zu finden, das es gestattet, Derivate des Polytetrahydrofurans auf einfache Weise und in hoher Einheitlichkeit herzustellen, die sich glatt in die entsprechenden primären ω,ω'-Amine überführen lassen.

Nach dem neuen Verfahren, das diese Anforderungen in hohem Maße erfüllt, stellt man Polytetrahydrofuranalkylsulfonate der allgemeinen Formel 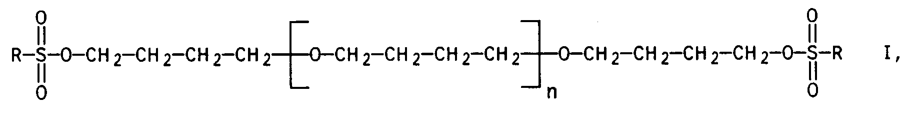
in der R einen Alkylrest mit 1 bis 4 C-Atomen und n eine ganze Zahl von 3 bis 150 bedeuten, dadurch her, daß man Polytetrahydrofuran der allgemeinen Formel 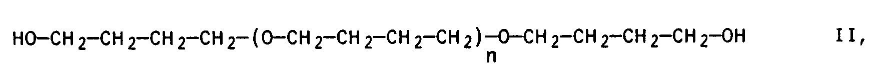
in der n die obengenannte Bedeutung hat, mit einem Alkylsulfonsäurehalogenid der allgemeinen Formel

R-SO₂-X III,

in der x ein Chlor-, Brom- oder Iodatom bedeutet und R die obengenannte Bedeutung hat, umsetzt.

In den Polytetrahydrofuranderivaten der Formel I bedeutet R einen Alkylrest mit 1 bis 4 C-Atomen, wie Methyl, Ethyl, Propyl oder Butyl; n steht für eine ganze Zahl von 3 bis 150, vorzugsweise 3 bis 70, insbesondere 3 bis 55. Sie sind wertvolle Zwischenprodukte für die Herstellung polymerer Kunststoffe.

Die Polytetrahydrofuranderivate der Formel I werden durch Umsetzung von Tetrahydrofuran der Formel II mit einem Alkylsulfonsäurehalogenid der Formel III erhalten. Das Alkylsulfonsäurehalogenid wird zweckmäßigerweise in der mindestens stöchiometrischen Menge, z.B. bis zur doppelten stöchiometrischen Menge, bezogen auf das Polytetrahydrofuran, eingesetzt.
Vorzugsweise beträgt der Überschuß bis zu 20 %, insbesondere bis zu 10 %. Man führt die Umsetzung bei Temperaturen bis 100, vorzugsweise 0 bis 70, insbesondere 10 bis 40°C und in Gegenwart von basisch wirkenden Stoffen durch. Als basisch wirkende Stoffe kommen vorzugsweise tertiäre Amine, z.B. Trialkylamine, wie Tributylamin, Triethylamin, N,N-Dimethylanilin oder heterocyclische Stickstoffverbindungen mit tertiärem N-Atom, wie Pyridin, Picolin und Chinolin in Betracht. Man kann als basisch wirkende Stoffe aber auch Carbonate, Hydroxide oder Hydride der Alkali- oder Erdalkalimetalle, wie Kaliumcarbonat, Kaliumhydroxid, Natriumhydrid oder Alkoholate, wie Kalium-tertiär-butoxylat einsetzen.

Man setzt die basisch wirkenden Stoffe z.B. in stöchiometrischen Mengen, bezogen auf das Alkylsulfonsäurehalogenid, ein, wobei jedoch auch mit einem Über- oder Unterschuß von 10 bis 20 % gearbeitet werden kann.

Man führt die Umsetzung zweckmäßigerweise in einem Lösungsmittel durch. Geeignet sind alle Lösungsmittel, die unter den Umsetzungsbedingungen nicht mit dem Sulfonsäurehalogenid reagieren und in denen Polytetrahydrofuran löslich ist, das sind z.B. Ether, wie Methyl-tert.-butylether, Diethylether, Dioxan oder Tetrahydrofuran, Carbonylverbindungen, wie Aceton, Methylethylketon, Methylisobutylketon oder Essigester, aliphatische Kohlenwasserstoffe, wie Cyclohexan, Methylenchlorid oder Dichlorethan, oder aromatische Kohlenwasserstoffe, wie Toluol, Benzol oder Xylol. Man kann die Umsetzung aber auch in den obengenannten tertiären Aminen durchführen.

Die Umsetzungsgemische werden auf einfache Weise z.B. dadurch aufgearbeitet, daß man Wasser hinzugibt, die organische Phase abtrennt, zur Abtrennung gebildeter Salze und gegebenenfalls des Lösungsmittels mit Wasser wäscht und restliches Lösungsmittel abdestilliert.

Die Polytetrahydrofuran-alkylsulfonate der Formel I können z.B. für die Herstellung von Bisaminen der Formel IV verwendet werden. Zu diesem Zweck werden die Alkylsulfonate nach an sich bekannten Methoden, z.B. bei Temperaturen von 0 bis 100°C, in Lösungsmitteln, z.B. Alkoholen, wie Methanol, Ethanol, Isopropanol oder Butanol, Ethern, wie Methyl-tert.-butylether, Diethylether, Dioxan, Tetrahydrofuran, oder aromatischen Kohlenwasserstoffen, wie Toluol, Benzol, Xylol, oder den oben erwähnten tertiären Aminen mit Ammoniak umgesetzt.

Die Vorteile dieser Erfindung ergeben sich insbesondere aus der erzielten hohen Ausbeute und Reinheit der Polytetrahydrofuran-alkylsulfonate. Gegen- über über dem bekannten Polytetrahydrofuran-bis-p-toluolsulfonat weist das Polytetrahydrofuran-bismethylsulfonat, offensichtlich wegen der größeren Reaktivität der Methylsulfonylgruppe im Vergleich zu der Toluolsulfonylgruppe, unerwartet günstigere Eigenschaften auf. So erhält man das Bismethansulfonat aus Polytetrahydrofuran und Methylsulfonsäurechlorid schon bei Temperaturen von 10 bis 15°C innerhalb von 1 bis 2 Stunden mit 99 %iger Ausbeuten, bezogen auf eingesetztes Polytetrahydrofuran. Das nach Beispiel 1 erhaltene Polytetrahydrofuran-bismethylsulfonat ist spektroskopisch rein und liefert bei der Umsetzung mit Ammoniak die ω,ω'-Diamin-Verbindung in Ausbeuten von über 95 %, wobei der Anteil an primärem Amin bei 95 bis 99 % liegt (s. Beispiel 2).

### Beispiel 1

### Herstellung von Polytetrahydrofuran-bismethylsulfonat

In einer mit Rückflußkühler, Tropftrichter und Innenthermometer versehenen 500 ml-Rührapparatur werden bei 10 bis 15°C 62,4 g Polytetrahydrofuran mit dem Molekulargewicht 624 (n = 6,4)(ca. 0,1 mol) in 170 ml Methyl-tert.-butylether (MTB) vorgelegt. Dann werden 24,3 g Triethylamin (0,24 mol) zugegeben. Danach tropft man unter gutem Rühren während ca. 1 Stunde 26,3 g Methansulfonsäurechlorid (0,23 mol) ein und hält das Reaktionsgemisch noch eine weitere Stunde bei 10 bis 15°C.

Zur Abtrennung der gebildeten Ammoniumsalze wird das Reaktionsgemisch mit 400 ml Wasser versetzt. Die organische obere Phase wird zweimal mit je 100 ml gesättigter wäßriger NaCl-Lösung ausgeschüttelt. Nach dem Trocknen der organischen Phase wird das Lösungsmittel abdestilliert. Es bleiben 78,0 g (≙ ca. 0,1 mol, 100 % Ausbeute) Polytetrahydrofuran-bismethylsulfonat als farbloses, zähes Öl zurück.

### Analysen:

OH-Zahl: < 1
Säurezahl: < 1
Mol-Gewicht (osm.): 800
¹H-NMR (CDCl₃): 4.25 (t, α-CH₂), 3.4 (m, Polyether-CH₂), 3.0 (s, OCH₃), 1.85 (m, ß-CH₂), 1.63 (m, Polyether-CH₂).
IR (Film): 2940, 2857, 2798, 1356, 1176, 1111, 1021, 974, 943, 528 cm⁻¹.

### Beispiel 2

### Verwendung von Polytetrahydrofuran-bismethylsulfonat zur Herstellung von Polytetrahydrofuran-ω,ω'-diamin

In einem 300 ml Autoklav werden 11,2 g (≙ ca. 0,015 mol) nach Beispiel 1 erhaltenes Polytetrahydrofuran-bismethylsulfonat in 40 ml Methanol gelöst. Bei Raumtemperatur werden 65 ml Ammoniak zugepumpt. Man rührt 24 h unter Eigendruck (ca. 10 bar) und entspannt. Nach Zugabe von 100 ml 2 N Natronlauge wird dreimal mit 100 ml MTB ausgeschüttelt. Die vereinigten organischen Phasen werden getrocknet.

Nach Abdestillieren des Lösungsmittels hinterbleiben 8,5 g Polytetrahydrofuran-ω,ω'-diamin (≙ 97.6 % Ausbeute) als zähes, farbloses Öl.

### Analysen:

### Pot. Titration:

Primäres Amin: > 95 %
Sekundäres Amin: < 5 %
¹H-NMR (CDCl₃): 3.4 (m, Polyether-CH₂), 2.7 (t, α-CH₂), 1.62 (m, Polyether-CH₂), 1.43 (s, NH₂)
IR (Film): 2937, 2856, 2796, 1447, 1367, 1209, 1113, 984, 961, 735 cm⁻¹.

### Beispiel 3 (Vergleichsbeispiel gemäß Beispiel der US-A-3,405,105 mit Methansulfonsäure)

Zu 360 g Tetrahydrofuran (5 mol) wurden unter Rühren bei Raumtemperatur 167 g Methansulfonsäure getropft (1,74 mol). Dann wurde das Gemisch weitere 5 h gerührt und auf 2 l Eiswasser gegeben. Dabei trat keine Phasentrennung auf. Daraufhin wurde dreimal mit je 100 ml MTB ausgeschüttelt. Die vereinigten organischen Phasen wurden getrocknet und im Wasserstrahlvakuum bei 50°C eingeengt. Es blieben 4,3 g eines öligen Rückstands zurück (≙ ca. 1 % Ausbeute bezogen auf Tetrahydrofuran).

### Analysen:

Osm. Molgewicht: 1400

| CHNOS-Analyse: | | | | | |
|---|---|---|---|---|---|
| gef.: | 62,7 C | 10,6 H | - N | 24,0 O | 2,3 S |
| theor.: | 63,0 C | 10,7 H | - N | 24,1 O | 2,3 S |

¹H-NMR (CDCl₃): 4,23 (t, -CH₂-O-SO₂-CH₃), 3,62 (t, -CH₂-OH), 3,4 (m, Polyether-CH₂), 3,0 (s, OCH₃), 2,6 (m, OH), 1,85 (m, -CH₂-CH₂-O-SO₂-CH₃), 1,63 (m, Polyether-CH₂)
Integrationsverhältnis -CH₂-O-SO₂-CH₃-Protonen zu -CH₂-OH-Protonen = 1:1.

Die Analysen zeigen, daß praktisch ausschließlich Polytetrahydrofuran-Ketten mit halbseitig mesylierten OH-Gruppen entstanden sind.

## Patentansprüche

1. Verfahren zur Herstellung von Polytetrahydrofuran-alkylsulfonaten der allgemeinen Formel 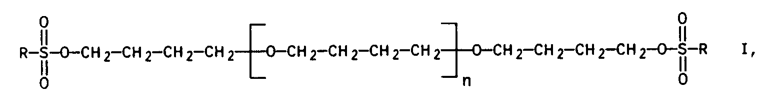 in der R einen Alkylrest mit 1 bis 4 C-Atomen und n eine ganze Zahl von 3 bis 150 bedeuten, dadurch gekennzeichnet, daß man Polytetrahydrofuran der Formel 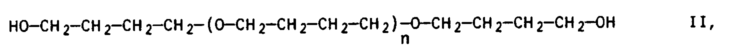 in der n die obengenannte Bedeutung hat, mit einem Alkylsulfonsäurehalogenid der allgemeinen Formel
R-SO₂-X III,
in der X ein Chlor-, Brom- oder Iodatom bedeutet und R die obengenannte Bedeutung hat, umsetzt.

2. Verfahren nach Anspruch 1, dadurch gekennzeichnet, daß man das Alkylsulfonsäurehalogenid in mindestens stöchiometrischen Mengen, bezogen auf das Polytetrahydrofuran, einsetzt, und die Umsetzung bei Temperaturen bis 100°C in Gegenwart von basisch wirkenden Stoffen vornimmt.

3. Verfahren zur Herstellung von Bisaminen der allgemeinen Formel 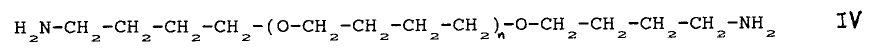 in der n die in Anspruch 1 genannte Bedeutung hat, dadurch gekennzeichnet, daß man die Polytetrahydrofuranalkylsulfonate der allgemeinen Formel 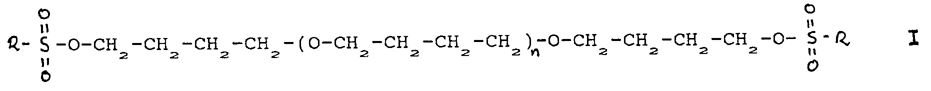 in der n und R die in Anspruch 1 genannte Bedeutung haben, die nach dem Verfahren gemäß Anspruch 1 hergestellt worden sind, mit Ammoniak bei Temperaturen von 0 bis 100°C umsetzt.

## Claims

1. A process for the preparation of a polytetrahydrofuran alkylsulfonate of the formula 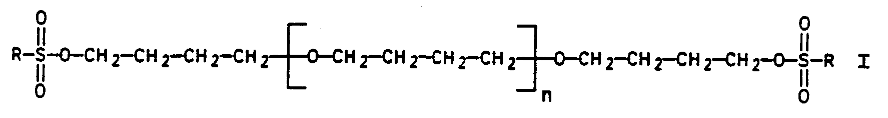 where R is alkyl of 1 to 4 carbon atoms and n is an integer of from 3 to 150, wherein a polytetrahydrofuran of the formula 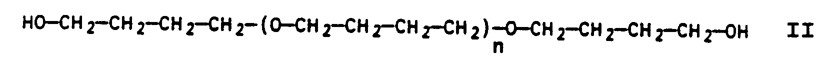 where n has the abovementioned meaning, is reacted with an alkylsulfonyl halide of the formula
R-SO₂-X III
where X is chlorine, bromine or iodine and R has the abovementioned meaning.

2. A process as claimed in claim 1, wherein the alkylsulfonyl halide is used in not less than the stoichiometric amount, based on the polytetrahydrofuran, and the reaction is carried out at up to 100°C in the presence of a basic substance.

3. A process for the preparation of a bisamine of the formula 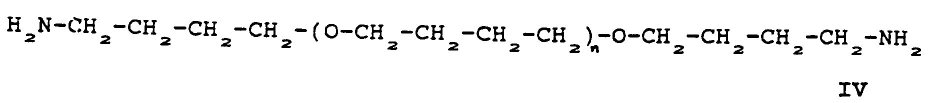 where n has the meanings stated in claim 1, wherein a polytetrahydrofuran alkylsulfonate of the formula 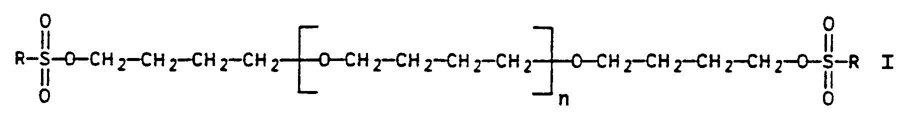 where n and R have the meanings stated in claim 1, which has been prepared by the process as claimed in claim 1, is reacted with ammonia at from 0 to 100°C.

## Revendications

1. Procédé de préparation d'alkylsulfonates de polytétrahydrofuranne de la formule générale 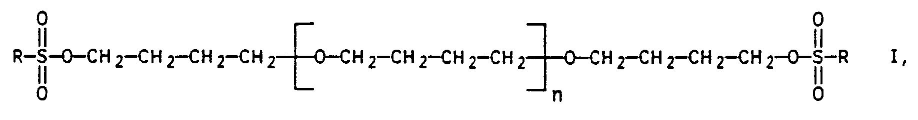 dans laquelle R représente un radical alkyle qui comporte de 1 à 4 atomes de carbone et n représente un nombre entier dont la valeur varie de 3 à 150, caractérisé en ce que l'on fait réagir le polytétrahydrofuranne de la formule 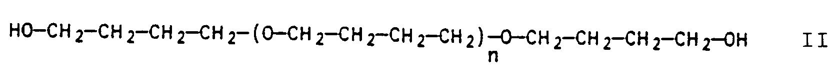 dans laquelle n a les significations qui lui ont été attribuées ci-dessus, avec un halogénure d'acide alkylsulfonique de la formule générale
R-SO₂-X III,
dans laquelle X représente un atome de chlore, de brome ou d'iode et R possède les significations qui lui ont été précédemment attribuées.

2. Procédé suivant la revendication 1, caractérisé en ce que l'on met en oeuvre l'halogénure d'acide alkylsulfonique en proportions au moins stoechiométriques, par rapport au polytétrahydrofuranne et on entreprend la réaction à des températures allant jusqu'à 100°C, en présence de substances à activité basique.

3. Procédé de préparation de bisamines de la formule générale 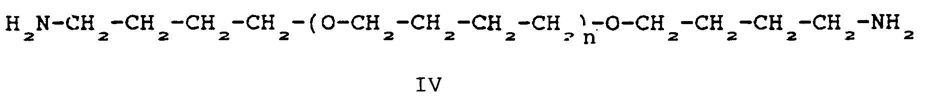 dans laquelle n a les significations qui lui ont été attribuées dans la revendication 1, caractérisé en ce que l'on fait réagir les alkylsulfonates de polytétrahydrofuranne de la formule générale 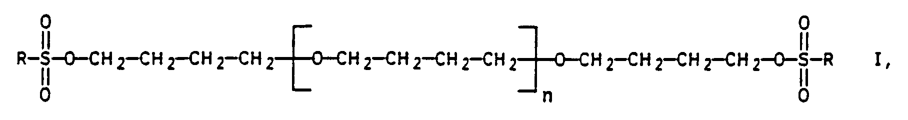 dans laquelle n est R possèdent les significations qui leur ont été attribuées dans la revendication 1, préparés par mise en oeuvre du procédé suivant la revendication 1, avec l'ammoniac à des températures de 0 à 100°C.
